# FASCICULE DE BREVET EUROPEEN

(11) **EP 1 060 006 B1**
(45) Date de publication et mention de la délivrance du brevet: **25.09.2002**
(21) Numéro de dépôt: 99904926.5
(22) Date de dépôt: 22.02.1999
(51) Int. Cl.: B01D 65/10, G01M 3/24, G01N 15/08

(54) **PROCEDE DE CONTROLE DE L'INTEGRITE DES MODULES DE FILTRATION A FIBRES CREUSES**
VERFAHREN ZUR ÜBERWACHUNG DER UNVERSEHRTHEIT VON HOHLFASERFILTERMODULEN
METHOD FOR CONTROLLING THE INTEGRITY OF HOLLOW FIBRE FILTERING MODULES

(30) Priorité: 02.03.1998 FR 9802491
(43) Date de publication de la demande: 20.12.2000
(73) Titulaire: Suez Lyonnaise des Eaux, 92753 Nanterre Cedex (FR)
(72) Inventeur: GLUCINA, Karl, F-78100 Saint Germain en Laye (FR); LAINE, Jean-Michel, F-78920 Ecquevilly (FR); MOULART, Pierre, F-92500 Rueil Malmaison (FR); CHEVALIER, Marie-Reine, F-78380 Bougival (FR)
(74) Mandataire: Armengaud Ainé, Alain
(86) Numéro de dépôt international: FR9900393
(87) Numéro de publication internationale: WO99044728

(56) Documents cités:
- EP-A- 0 640 822
- WO-A-94/09890
- WO-A-94/11721
- US-A- 4 744 240
- PATENT ABSTRACTS OF JAPAN vol. 016, no. 075 (P-1316), 24 février 1992 & JP 03 264845 A (AKUA RUNESANSU GIJUTSU KENKYU KUMIAI), 26 novembre 1991 -& DATABASE WPI Section Ch, Week 9202 Derwent Publications Ltd., London, GB; Class J04, AN 92-013729 XP002082686

## Description

La présente invention concerne un procédé et un dispositif destinés à contrôler l'intégrité de modules de microfiltration ou d'ultrafiltration qui sont utilisés dans les processus de séparation et de concentration de solutions et notamment dans le domaine du traitement des eaux.

On sait que de tels module mettent en oeuvre une pluralité de fibres creuses regroupées en faisceaux et le problème que se propose de résoudre la présente invention est celui de la détection d'une rupture de fibres qui se traduit par un passage du fluide directement du côté sale de la membrane (concentrat) au côté propre (perméat) au travers de la ou des fibres complètement ou partiellement cassées.

Il existe à l'heure actuelle un certain nombre de procédé de détection de la modification de l'intégrité des modules de micro ou d'ultrafiltration qui peuvent être rangés en deux catégories :
- procédés mettant en oeuvre un contrôle de la qualité de l'eau traitée,
- procédé mettant en oeuvre une détection des fuites à l'aide d'un processus physique.

On donnera ci-après quelques précisions concernant l'état antérieur de la technique correspondant aux procédés appartenant aux deux catégories ci-dessus:

### Contrôle de la qualité de l'eau traitée

### Mesure de turbidité.

L'eau traitée sur membrane présente en général une turbidité inférieure à 0,1 NTU (unité néphélométrique de turbidité). Un défaut d'intégrité de module devrait donc se traduire par une augmentation de la turbidité. Cependant si l'eau à traiter est peu turbide, l'effet de dilution rend impossible la détection d'une fuite d'une fibre cassée parmi des dizaines de milliers de fibres, soit quelques modules. La détection ne sera efficace que si l'eau à traiter est très chargée. Par exemple, si l'on traite de l'eau chargée avec 0,8 g/l de charbon actif en poudre, on détecte facilement une fibre cassée parmi 120 000 (8 modules). Avec de l'eau brute de faible turbidité, par exemple, 0,5 NTU, la détection d'une fibre cassée parmi 15 000 (un seul module) n'est pas assurée.

### Comptage de particules

Ce procédé est beaucoup plus sensible que celui de la mesure de turbidité mais il présente également des limites. Avec cette technique, on peut détecter une fibre cassée parmi 420 000 fibres qui traitent de l'eau relativement chargée (0,15 mg/l de charbon actif) et fonctionnant en mode tangentiel. En mode frontal et avec de l'eau peu turbide, on ne peut détecter une fibre cassée que sur quelques modules, soit environ 100 000 fibres. En outre, ce procédé exige beaucoup de soins et d'entretien.

### Analyses bactériologiques

Il s'agit là d'un procédé lourd et long à mettre en oeuvre et qui est sujet à des contaminations extérieures. Il faut disposer d'au moins deux résultats négatifs consécutifs pour commencer à confirmer une fuite. Ce procédé peut mettre en oeuvre un détecteur de Colibaciles mais, on a constaté que même non intègres, les membranes produisaient en général de l'eau exempte de Escherichiae Coli. Ce système ne peut donc pas être appliqué. Par ailleurs, la détection demande plusieurs jours.

En conclusion, les méthodes reposant sur un contrôle de la qualité de l'eau traitée sont plus ou moins fiables et elles présentent une précision limitée. Elles sont globales étant donné que la mesure est effectuée au niveau d'une station, d'un groupe de machines de filtration, au mieux d'une seule machine comportant plusieurs modules. Il faut donc ensuite appliquer d'autres méthodes pour trouver le module défaillant. Le procédé de détection est donc trop long.

### Détection des fuites

### Test de pression à l'air

II s'agit du test le plus connu qui consiste à enfermer un volume d'air sous pression d'un côté de la membrane et à mesurer le temps nécessaire à une chute de pression déterminée au travers de la membrane. Les pores de la membrane étant remplis d'eau, l'air diffuse lentement à travers cette eau et la pression baisse lentement selon une pente étalon. Si la chute est plus rapide, ceci signifie que la membrane fuit et donc qu'au moins une fibre est cassée.
Cette méthode est relativement précise si elle est mise en oeuvre module par module. Cependant, dans ce cas, il faut réaliser une opération manuelle pour isoler le module et effectuer le branchement de l'air. Cette méthode est approximative quand elle est mise en oeuvre à l'échelle d'une machine de filtration. De plus, le vieillissement des modules fait varier la vitesse de diffusion de l'air et il devient alors difficile de distinguer entre une fibre cassée et une augmentation générale de la porosité de la membrane.

### Test de diffusion d'air

Dans la mise en oeuvre de ce procédé, un des côtés de la membrane est maintenu sous eau et l'autre est soumis à une faible pression d'air. Si la membrane n'est pas intègre, l'air passant par la fuite provoque une augmentation rapide de la pression côté eau. Avec cette technique, on s'affranchit de l'interférence de la diffusion de l'air qui est beaucoup plus lente dans ce cas, puisqu'il faut atteindre la saturation en air dissout de l'eau puis son dégazage avant qu'elle ne se manifeste.

### Détection acoustique

Cette technique consiste à utiliser un stéthoscope pour identifier un module qui fuit lorsque l'air passe au travers d'une fibre cassée. Le « bullage » ainsi produit côté eau est facilement audible. Cette auscultation est réalisée par un opérateur.

WO 94 09890 décrit un procédé pour détecter une fibre défectueuse dans un système de filtration à membranes de microfiltration. Selon ce procédé, on délivre un gaz sous pression dans l'enceinte comprise entre les fibres de la membrane et l'enveloppe filtre et l'on détecte, aux extrémités des fibres, la formation de bulles indiquant la présence d'une fibre défectueuse. Ce procédé fait donc appel à un "point de bullage", après isolation du module ou du banc de plusieurs modules. Il s'agit donc d'un système biphasique, gaz-liquide, qui n'est utilisable qu'après arrêt de l'installation.

WO 94/11729 concerne également une méthode de détection qui nécessite un arrêt de l'installation avec une présence de gaz des deux côtés de la membrane.

US-A-4744240 concerne un procédé pour traiter des modules de microfiltration qui fait également appel à l'application d'un gaz au travers d'une membrane et une mesure d'un point de bullage représentatif de la taille des pores ou des trous présents dans la membrane. Dans ce système qui est un système biphasique gaz-liquide, il faut également arrêter l'installation pour effectuer la mesure.

En conclusion, la technique de contrôle de l'intégrité des modules basée sur une détection de fuite ne peut être mise en oeuvre que pendant un arrêt de production et elle demande plusieurs minutes. Par ailleurs et lorsque cette technique est appliquée sur un ensemble de modules (une machine de filtration), il est nécessaire, en cas de défaut constaté, d'effectuer une intervention supplémentaire (par exemple écoute au stéthoscope) afin d'identifier le module défaillant, cette écoute devant être effectuée également après arrêt de la production.

La présente invention se propose d'apporter un procédé ne présentant pas les inconvénients des solutions mentionnées ci-dessus.

L'invention a donc pour objet un procédé de contrôle de l'intégrité des modules de filtration à fibres creuses et de détection de fuites du liquide traité au travers d'une fibre complètement ou partiellement cassée, caractérisé en ce qu'il consiste de façon continue et en mode filtration, sans arrêt de la production à :
- détecter le bruit occasionné par le passage du liquide au travers d'une fibre rompue;
- amplifier le signal bruit ainsi obtenu et,
- comparer le signal amplifié ainsi obtenu à un niveau de bruit seuil, dans la même gamme de fréquences, caractéristique des modules intègres, cette comparaison permettant de détecter si le module est ou non intègre.

L'invention vise également un dispositif pour la mise en oeuvre du procédé spécifié ci-dessus, ce dispositif étant caractérisé en ce qu'il comprend:
- un hydrophone monté sur la purge basse de chaque module; au contact du perméat de façon à écouter en continu le bruit du passage du liquide en mode filtration
- un amplificateur des signaux délivrés par ledit capteur et,
- un comparateur-analyseur assurant la comparaison du signal bruit capté amplifié et d'un niveau de bruit seuil caractéristique d'un module intègre, l'analyse de la comparaison permettant de détecter la présence éventuelle d'une fuite sur ledit module.

D'autres caractéristiques et avantages de la présente invention ressortiront de la description faite ci-après en référence au dessin annexé sur lequel.
- la figure 1 est une courbe illustrant la signature acoustique d'un module et,
- la figure 2 est une représentation schématique illustrant un mode de réalisation du dispositif selon l'invention.

Ainsi qu'on le comprend, le procédé objet de la présente invention repose sur la détection du bruit provoqué par le passage du fluide traité, directement du côté sale de la membrane (concentrat) au côté propre (perméat) à travers une fibre complètement ou partiellement cassée du module de filtration.

La présente invention n'est pas limitée à l'utilisation d'un microordinateur pour l'analyse des signaux. Les signaux peuvent être recueillis sur l'installation et analysés sur un automate central programmable.

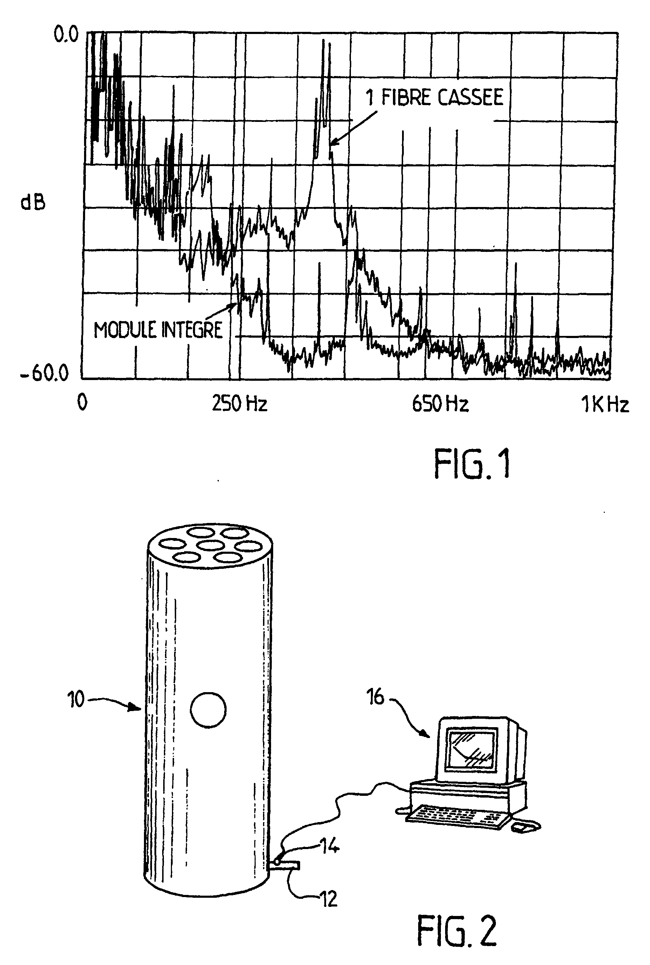

Sur la figure 2, on a représenté en 10 un module de filtration du type comportant une pluralité de fibres creuses regroupées en faisceaux. Selon l'invention, sur la purge basse 12 de ce module 10, on a implanté un capteur 14 réalisé sous la forme d'un hydrophone permettant d'écouter directement, en contact avec l'eau propre (perméat) le bruit du passage du fluide. Chaque module tel que 10 est pourvu d'un hydrophone tel que 14.

Le signal délivré par l'hydrophone est amplifié et analysé par un dispositif électronique réalisé sous la forme d'un micro-ordinateur 16 afin de mesurer le niveau de bruit dans une gamme de fréquences présélectrionnées, caractéristique des modules intègres. Le résultat de la mesure est ensuite comparé à un niveau de bruit seul, dans le même gamme de fréquences, et cette comparaison permet d'indiquer si le module est ou non intègre.

Sur la courbe de la figure 2, on voit clairement la manière selon laquelle se manifeste la présence d'une fibre cassée, dans le module de filtration, l'augmentation caractéristique du niveau de bruit de la signature acoustique du module permettant de détecter immédiatement une anomalie de l'intégrité dudit module.

Les essais réalisés par la présente titulaire ont démontré que le niveau de bruit de référence pour les modules intègres était homogène et ne variait pas sensiblement d'un site à l'autre, ni d'une position, dans la machine de filtration, à une autre position. Il a été ainsi démontré que la notion de « signature acoustique » module par module, position par position ou site par site, n'est pas déterminante et que l'enregistrement du niveau de bruit initial n'est pas nécessaire à la détection.

On peut selon l'invention prévoir différentes utilisations parmi lesquelles on citera notamment la suivante.
- mise en oeuvre en mode filtration, sans arrêt de la production, en écoutant le bruit provoqué par le passage de l'eau au travers d'une fuite éventuelle ;

On comprend, de la lecture de la description qui précède que le procédé objet de l'invention permet, en mode filtration, de réaliser un contrôle quasi continu de l'intégrité des modules étant donné qu'en quelques secondes, automatiquement et à chaque cycle de filtration, soit environ toutes les heures, on peut vérifier module par module, l'intégrité des fibres de ces modules. L'indication de non intégrité permet une identification du module défaillant. Ce résultat ne peut en aucun cas être atteint par la mise en oeuvre des divers procédés.actuellement connus mentionné ci-dessus, lesquels impliquent un arrêt de production pour réaliser la détection et la mise en oeuvre de techniques différentes pour l'identification du module défectueux, après détection d'une fuite sur l'ensemble des modules de la machine de filtration alors que l'invention permet d'identifier immédiatement le module non intègre.

## Revendications

1. Procédé de contrôle in situ de l'intégrité des modules de filtration à fibres creuses et de détection de fuites du liquide traité au travers d'une fibre complètement ou partiellement cassée **caractérisé en ce qu'**il consiste de façon continue et en mode filtration, sans arrêt de la production à:
- détecter le bruit occasionné par le passage du liquide au travers d'une fibre rompue;
- amplifier le signal bruit ainsi obtenu et,
- comparer le signal amplifié ainsi obtenu à un niveau de bruit seuil, dans la même gamme de fréquences, caractéristique des modules intègres, cette comparaison permettant de détecter si le module est ou non intègre.

2. Dispositif pour la mise en oeuvre du procédé selon la revendication 1, **caractérisé en ce qu'**il comprend :
- un hydrophone (14) monté sur la purge basse (12) de chaque module de filtration (10), au contact du liquide propre ou permeat de façon à écouter en continu le bruit du passage du liquide en mode filtration;
- un amplificateur des signaux délivrés par ledit capteur et,
- un comparateur-analyseur assurant la comparaison du signal bruit capté, amplifié et d'un niveau de bruit seuil caractéristique d'un module intègre, l'analyse de la comparaison permettant de détecter la présence éventuelle d'une fuite sur ledit module.

## Claims

1. Method for the in situ control of the integrity of hollow fibre filtering modules and for the detection of leaks of the liquid treated through a completely or partly broken fibre, **characterized in that** it consists in a continuous manner and in filtration mode and without stopping production:
- detecting the noise caused by the passage of the liquid through the broken fibre,
- amplifying the thus obtained noise signal and
- comparing the thus obtained amplified signal with a threshold noise level in the same frequency range, which is a characteristic of perfect modules, said comparison making it possible to establish whether or not the module is perfect.

2. Device for performing the method according to claim 1, **characterized in that** it comprises:
- a hydrophone-type sensor (14) installed on the bottom purge drain (12) of each filtration module (10) in contact with the clean liquid or permeate so as to continuously listen to the noise of the passage of the liquid in the filtration mode,
- an amplifier of the signals delivered by said sensor and
- a comparator-analyzer for comparing the sensed, amplified, noise signal and a threshold noise signal, characteristic of a perfect module, analysis of the comparison making it possible to detect the possible presence of a leak on said module.

## Patentansprüche

1. Verfahren zur Überprüfung der Unversehrtheit von Hohlfaserfiltermodulen *in situ* und zum Nachweis von Austritten der behandelten Flüssigkeit aus einer vollständig oder teilweise gebrochenen Faser, **dadurch gekennzeichnet, dass** es während des Filtrationsvorgangs, ohne dabei die Produktion zu unterbrechen, im kontinuierlichen
- Messen des Lärms, der vom Austritt der Flüssigkeit aus einer gebrochenen Faser verursacht wird,
- Verstärken des so erhaltenen Lärmsignals und
- Vergleichen des so erhaltenen verstärkten Signals mit einem Lärmgrenzwert im selben Frequenzbereich, der für die intakten Module charakteristisch ist, wobei es dieser Vergleich erlaubt, festzustellen, ob das Modul gegebenenfalls beschädigt ist,
besteht.

2. Vorrichtung zur Durchführung des Verfahrens nach Anspruch 1, **dadurch gekennzeichnet, dass** sie
- ein Hydrophon (14), das am unteren Ablaß (22) des jeweiligen Filtrationsmoduls (10) in Berührung mit der sauberen Flüssigkeit bzw. dem Permeat derart angebracht ist, dass es kontinuierlich den Lärm des Durchlaufs der Flüssigkeit im Filtrationsmodus hört,
- einen Verstärker für die von diesem Sensor gelieferten Signale und
- einen Vergleichsmesser, der den Vergleich des verstärkten aufgenommenen Lärmsignals mit einem Lärmgrenzwert sicherstellt, der für ein intaktes Modul charakteristisch ist, wobei die Analyse des Vergleichs den Nachweis eines eventuellen Flüssigkeitsaustritts aus dem Modul erlaubt,
umfasst.
